# EUROPEAN PATENT SPECIFICATION

(11) **EP 2 244 205 B1**
(45) Date of publication and mention of the grant of the patent: **07.10.2015**
(21) Application number: 09710052.3
(22) Date of filing: 12.02.2009
(51) Int. Cl.: G06K 7/10, G06K 19/07, G06K 7/00

(54) **COMMUNICATION METHOD FOR RADIO FREQUENCY IDENTIFICATION**
KOMMUNIKATIONSVERFAHREN FÜR FUNKFREQUENZIDENTIFIZIERUNG
MÉTHODE DE COMMUNICATION POUR IDENTIFICATION PAR RADIOFRÉQUENCE

(30) Priority: 12.02.2008 US 27867 P; 22.12.2008 KR 20080131264
(43) Date of publication of application: 27.10.2010
(73) Proprietor: CISC Semiconductor GmbH, 9020 Klagenfurt (AT)
(72) Inventor: KIM, Hyunseok, Daejeon-City 305-350 (KR); SEONG, Nak-Seon, Daejeon-City 305-755 (KR); JUNG, Jae-Young, Daejeon-City 305-770 (KR); LEE, Heyung-Sub, Daejeon-City 302-741 (KR); PYO, Cheol-Sig, Daejeon-City 302-741 (KR); CHAE, Jong- Suk, Daejeon-City 305-340 (KR); PREISHUBER-PFLUEGL, Josef, A-9020 Klagenfurt (AT); TSCHISCHE, David, A-9020 Klagenfurt (AT)
(74) Representative: Epping - Hermann - Fischer
(86) International application number: PCT/KR2009/000684
(87) International publication number: WO 2009/102158

(56) References cited:
- EP-A1- 1 496 469
- EP-A2- 1 503 222
- WO-A1-2007/099339
- WO-A2-2005/101288
- US-A- 5 745 049
- US-A1- 2003 030 568
- US-A1- 2004 257 204
- US-A1- 2007 262 144
- US-A1- 2009 033 493

## Description

### TECHNICAL FIELD

The present invention relates to a communication method for radio frequency identification (RFID), and more particularly, to an RFID reader, a tag, and a communication method performed by each of the RFID reader and the tag, which do not require additional communication for additional data since the RFID reader transmits a command message including a response format indicating a type of the additional data, wherein the additional data is to be added to a response message to be received from the tag.

### BACKGROUND ART

In general, a radio frequency identification (RFID) technology involves communicating with a tag in a non-contact manner via a radio frequency so as to read information from the tag or to write information to the tag which has unique identification information. This RFID technology is used in various fields including identifying, tracking and managing products, animals, people and the like, which have tags attached thereto. In particular, recently, the RFID technology has extended its application field so as to include sensing ambient information, in addition to transmission of unique identification information.

An RFID system includes a plurality of RFID tags (such as an electronic tag or transponder, hereinafter, referred to as a 'tag') which store unique identification information and which are attached to products, animals, and the like, and an RFID reader (such as a reader or an interrogator) for reading information stored in the tag or writing information to the tag.

The RFID system is classified into a mutual induction method type and an electromagnetic wave method type according to a communication manner between the reader and the tag. The RFID system is also classified into an active type and a passive type according to whether the tag operates by using its own power. The RFID system is further classified into a longwave type, a mediumwave type, a shortwave type, a very high frequency (VHF) type, and an ultra high frequency (UHF) type according to a frequency used. Currently, various standards are being formulated or are being prepared for formulation, according to such classifications with respect to the RFID system.

A set of inventory commands is defined in most RFID air specifications. Here, the inventory commands are issued by the reader so as to perform singulation on the tag.

In general, referring to The International Organization for Standardization/ The International Electrotechnical Commission (ISO/IEC) 18000-6REV1 and Electronic Product Code (EPC) global Class-1 Generation-2, an acknowledgment ACK command is transmitted by the reader so as to acknowledge a tag. As a result, the tag backscatters a predetermined bit-stream. The bit-stream may be processed by the reader (or, by middleware of the reader) for tag identification.

Currently, when the reader transmits the ACK command, the tag transmits data in response to the ACK command. At this time, the amount of data to be transmitted cannot be changed. That is, the tag cannot continuously backscatter data related to the tag identification after the tag responds to the ACK command. In the case where the tag attempts to transmit additional data (for example, sensor data or non-standardized extended protocol control bits (XPC)) to the reader, the reader needs to separately issue a reader command.

However, in order to separately issue the reader command, the reader needs to have prior knowledge of a dedicated memory location.

In this case, the tag needs to perform high-speed communication for retrieving location of a memory in which a sensor state record is stored. In this regard, when the reader attempts to check sensor states of tags after an inventory procedure is performed, an authentication procedure has to be performed on each of the tags, which takes a long time. Also, when the reader attempts to access an additional tag, there is a high possibility of reader collision in a dense environment including a plurality of readers.

Document WO2005/101288 A2 relates to a method for selecting at least one transponder or a sensor in RFID or remote-sensor systems provided with a plurality of transponders or sensors (tags), in particular in systems provided with a plurality of reading devices.

Document EP 1 503 222 A2 discloses a method of communicating between a base station and a plurality of transponders, wherein one or more transponders are selected by a base station out of a plurality of transponders. For this purpose an identification bit sequence (IB) that is or includes a random number bit sequence (ZB) is made available in the respective transponder and the base station transmits in a bit-by-bit fashion a selection bit sequence (AB) to the transponders. These sequences (IB or ZB) and (AB) are compared bit-by-bit in the respective transponder. The comparing is performed by way of a predeterminable comparing criterion to provide a comparing result in the form of a selection bit to which a bit value is assigned. The selection is then made depending on the bit value of the selection bit of the respective transponder.

### DETAILED DESCRIPTION OF THE INVENTION

### TECHNICAL PROBLEM

The present invention provides a communication method performed by each of a radio frequency identification (RFID) reader and a tag, which do not require additional communication for additional data since the RFID reader transmits a command message including a response format indicating information on a type of the additional data, wherein the additional data is to be added to a response message to be received from the tag.

### TECHNICAL SOLUTION

The present invention is defined in the independent claims. The dependent claims define advantageous embodiments thereof.

### DESCRIPTION OF THE DRAWINGS

FIG. 1 is a diagram of a scheme of a radio frequency identification (RFID) system according to an embodiment of the present invention.
FIG. 2 is a diagram of a structure of a command message from an RFID reader according to another embodiment of the present invention.
FIG. 3 is a diagram of a structure of a response message from an RFID tag according to another embodiment of the present invention.
FIG. 4 is a flowchart of a data transmitting method performed by an RFID reader, according to an embodiment of the present invention.
FIG. 5 is a flowchart of a data transmitting method performed by an RFID tag, according to another embodiment of the present invention.

### MODE OF THE INVENTION

Hereinafter, the present invention will be described in detail by explaining exemplary embodiments of the invention with reference to the attached drawings. In the following description, well-known functions or constructions are not described in detail since they would obscure the invention with unnecessary detail.

Meanwhile, when a part "includes" or "comprises" an element, unless there is a particular description contrary thereto, the part can further include other elements.

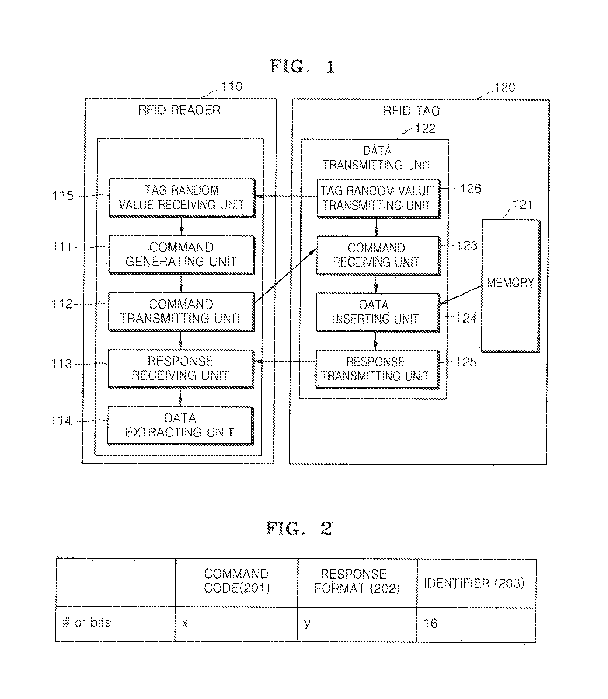

FIG. 1 is a diagram of a scheme of a radio frequency identification (RFID) system according to an embodiment of the present invention.

Referring to FIG. 1, the RFID system according to the embodiment of FIG. 1 includes an RFID reader 110 and an RFID tag 120 that transmits a response message in response to a command from the RFID reader 110.

The RFID reader 110 includes a command generating unit 111, a command transmitting unit 112, a response receiving unit 113, a data extracting unit 114, and a tag random value receiving unit 115.

The command generating unit 111 may generate a command message that includes a command code, an identifier and a response format field, and the command message may be different from a conventional general signal such as an acknowledgment ACK signal.

The command code includes one or more codes allocated to commands which are defined in a related standard such as The International Organization for Standardization/The International Electrotechnical Commission (ISO/IEC) 18000-6REV1 with respect to conventional general signals such as the ACK signal. Also, the command code may include a reserved for future use (RFU) command or a proprietary command, which is not defined in ISO/IEC 18000-6REV1 but may be newly defined when necessary.

The response format field includes one or more bits for indicating a type of additional data to be added to the response message to be received from the RFID tag 120.

Here, the additional data indicates information, as well as tag identifier information (or, a tag handle), which is necessary to be received from the RFID tag 120 and then to be processed by the RFID reader 110. According to the related art, the RFID reader 110 needs to scan an internal memory of a tag so as to access the information, wherein the internal memory stores data which correspond to the information. The additional data may include state information about a sensor connected to the RFID tag 120 or sensor data obtained by the sensor. Also, the additional data may include other data according to the use of a subject having the RFID tag 120 attached thereto, or according to the use of the RFID tag 120. Also, the additional data may be uniform resource locator (URL) or uniform resource name (URN) information on a unique item identifier (UII).

Here, the identifier indicates confirmation between the RFID reader 110 and the RFID tag 120 so as to confirm that the RFID reader 110 and the RFID tag 120 are dedicated to each other. In the embodiment of FIG. 1, the identifier is determined via a procedure to be described. In the procedure, when the RFID reader 110 and the RFID tag 120 start communication, the RFID tag 120 issues a random value in response to a query from the RFID reader 110 and transmits the random value to the RFID reader 110, and then, the random value, which is received by the RFID reader 110, is allocated to the identifier only when the random value does not collide with values allocated to other tags communicating with the RFID reader 110 so that an ACK signal is transmitted to the RFID tag 120.

With respect to the generation of a command message including an ACK code as the command code, when a random value received from the tag random value receiving unit 115 does not collide with an identifier of another tag communicating with the RFID reader 110, the command generating unit 111 allocates a value that is the same as the random value to an identifier.

Also, in the case where a command code is predetermined to indicate a specific type of additional data to be added to a response message, the command generating unit 111 may generate a command message not including a response format. At this time, the command code has to be different from the codes allocated to the commands so as not to collide with the commands which are defined in ISO/IEC 18000-6.

The command transmitting unit 112 transmits the command message, which is generated by the command generating unit 111, to the RFID tag 120. The response receiving unit 113 receives a response message, in response to the command message, from the RFID tag 120.

In the case where the command transmitting unit 112 does not receive the response message during a wait time period which is predetermined in the response receiving unit 113, the command transmitting unit 112 transmits a query, such as a QueryRep, newly requests a random value issued by the RFID tag 120 to identify the RFID tag 120.

That is, if the RFID tag 120 does not recognize the command message having a structure indicating the response format, the RFID tag 120 ignores the command message. In the case where the RFID tag 120 does not respond to the command message during the predetermined wait time period, it may be considered that the RFID tag 120 does not recognize the command message having the structure indicating the response format.

In the case where the RFID tag 120 operates by using its own power via a separate battery, the command generating unit 111 may temporarily discontinue transmission of the command message generated by the command generating unit 111.

The RFID tag 120 operates in a passive mode or a battery-assisted mode. Here, the passive mode involves receiving an electromagnetic wave type RF signal from the RFID reader 110 so as to form a magnetic field, producing electric power therefrom, and thus operating the RFID tag 120, that is, the passive mode involves operating or activating a chip in the RFID tag 120. The battery-assisted mode involves supplying power from a separate battery, and thus operating the RFID tag 120.

In general, an RFID tag is classified into an active type tag and a passive type tag. The active type tag uses a battery so as to supply power to a chip and to transmit a signal to an RFID reader. The passive type tag does not have a battery but is supplied a power from an electromagnetic wave of an RFID reader. In addition, a semi-passive type tag uses a battery so as to supply power to a chip but, for communication, the semi-passive type tag producing electric power from an electromagnetic wave of an RFID reader.

The command message including the response format according to the embodiment of FIG. 1 allows information stored in a memory of the RFID tag 120 to be easily retrieved by using a relatively small amount of power from the RFID tag 120 (corresponding to the passive or semi-passive type tag) that operates in the passive mode in which power is produced from an electromagnetic wave of the RFID reader 110. Therefore, if the RFID tag 120 operates by using its own power via the separate battery so that the RFID tag 120 is in the battery-assisted mode, the command message including the response format may not be used.

The data extracting unit 114 extracts additional data according to the response format with respect to the response message received by the response receiving unit 113.

The tag random value receiving unit 115 receives a random value issued by the RFID tag 120, in response to a request such as a Query requesting to start communication between the RFID reader 110 and the RFID tag 120.

When the random value received from the tag random value receiving unit 115 does not collide with an identifier of another tag communicating with the RFID reader 110, the command generating unit 111 allocates a value that is the same as the random value to an identifier and transmits an ACK signal including the identifier, and the RFID tag 120 transmits a response signal in response to the ACK signal. By doing so, an inventory in an RFID is formed.

The RFID tag 120 includes a memory 121 for storing the additional data, and a data transmitting unit 122.

The data transmitting unit 122 of the RFID tag 120 includes a command receiving unit 123, a data inserting unit 124, and a response transmitting unit 125.

The command receiving unit 123 receives a command message that includes command code, an identifier and a response format field, and the command message is different from a conventional general signal such as an ACK signal.

The response format field includes one or more bits, indicates a type of additional data to be added to the response message to be transmitted to the RFID reader 110.

Here, the additional data indicates information, as well as tag identifier information (or, a tag handle), which is necessary to be transmitted to the RFID reader 110 and which is mainly stored in the memory 121. The additional data may include state information about a sensor connected to the RFID tag 120 or sensor data obtained by the sensor. Also, the additional data may include other data according to the use of a subject having the RFID tag 120 attached thereto, or according to the use of the RFID tag 120. Also, the additional data may be URL or URN information on a UII.

The data inserting unit 124 inserts the additional data into the response message in response to the command message, according to the type of additional data, which is indicated by the one or more bits of the response format in the command message. The response transmitting unit 125 transmits the response message with the additional data to the RFID reader 110.

The RFID tag 120 may further include a tag random value transmitting unit 126 or a state changing unit (not shown).

The tag random value transmitting unit 126 transmits a random value issued by the RFID tag 120, in response to a request such as a Query of the RFID reader 110 requesting to start communication between the RFID reader 110 and the RFID tag 120.

When the command code of the command message received by the command receiving unit 123 is the same as an ACK code and when the identifier of the command message is the same as the random value transmitted from the tag random value transmitting unit 126, the state changing unit (not shown) changes a state of the RFID tag 120 into an ACK mode. Here, the ACK mode indicates a state in which the RFID tag 120 is recognized by the RFI D reader 110 so that the RFID tag 120 is identified as the identifier of the command message, that is, the RFID tag 120 is identified as a value that is the same as the random value transmitted from the tag random value transmitting unit 126. The identifier is inserted into messages to be exchanged between the RFID reader 110 and the RFID tag 120, and communication between the RFID reader 110 and the RFID tag 120 is performed by using the identifier.

FIG. 2 is a diagram of a structure of a command message 200 from an RFID reader according to another embodiment of the present invention.

Referring to FIG. 2, the command message 200 according to the embodiment of FIG. 2 includes a command code 201, a response format 202, and an identifier 203.

The command message according to one or more embodiments of the present invention is designed to retrieve verbose responses from tags (higher-functionality tags, semi-passive tags and active tags) in a class higher than class-1 including identity tags.

The command code 201 indicates a type of command to be delivered to an RFID tag. With respect to conventional commands, related command codes are defined in various standards such as ISO/IEC 18000-6. In addition to this, according to the use of a subject having a tag attached thereto, or according to the use of a tag, a command code indicating another command may be newly included.

The response format 202 is for indicating a detailed structure of a response message to be received from the RFID tag. The response format 202 includes one or more bits for indicating a type of additional data to be added to the response message to be received by each of the bits from the RFID tag.

For example, a first bit of the response format may be set to indicate whether to add a sensor data block to an area subsequent to a unique item identifier (UII) of the response message, and a second bit may be set to indicate whether to add a pass/fail indicator to the sensor data block. State information about a sensor connected to the RFID tag and/or sensor data obtained by the sensor may be recorded in the sensor data block. Here, the pass/fail indicator means an indicator indicating whether a value of the sensor data recorded in the sensor data block exceeds a predetermined upper limit threshold value or a predetermined lower limit threshold value. That is, by using this indicator, whether the value of the sensor data satisfies a condition desired by a user of the sensor may be indicated.

The identifier 203 is issued by a tag that receives a query request from a reader and thus is singulated. In the embodiment of FIG. 2, a 16-bit code is used as the identifier 203. However, a code value of the identifier 203 is not limited thereto and thus, other forms or various values may be used.

In the case where a command code indicating a command is inserted into a field of the command code 201, wherein the type of additional data that is to be added to the response message to be received from the RFID tag is predefined in the command, a field of the response format 202 may be omitted. In general, the command code may include an RFU command and a proprietary command, which are not defined in ISO/IEC 18000-6 which is a conventional standard, and thus, the command code needs to be different from codes allocated to commands which are defined in ISO/IEC 18000-6 and needs to be used without colliding with the commands. Examples of the command code may be a command requesting the RFID tag to transmit extended protocol control bits (XPC) subsequent to protocol control bits (PC) of the response message, or may be a command requesting to add a sensor data block (e.g., 32 bits) to the UII of the response message.

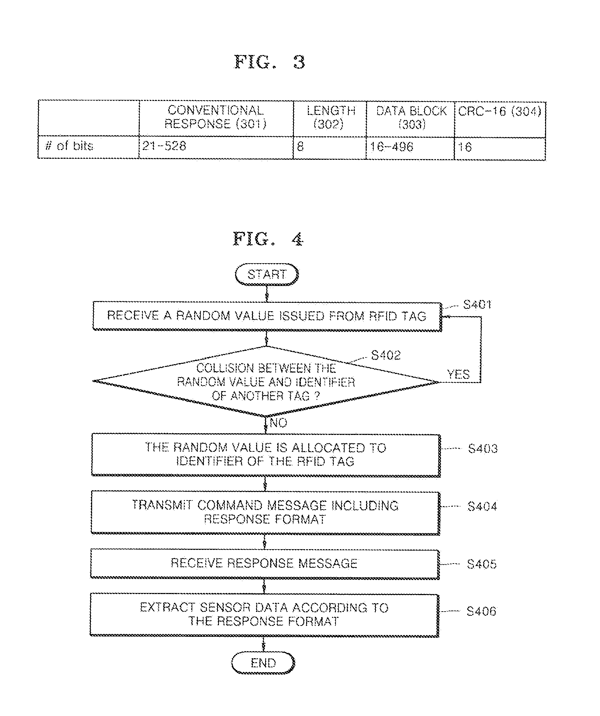

FIG. 3 is a diagram of a structure of a response message from an RFID tag according to another embodiment of the present invention.

Referring to FIG. 3, the response message according to the embodiment of FIG. 3 has a structure including a conventional response 301 in response to a command indicated by a command code and a data block 303 storing additional data and the like. In the case where the command code indicates an ACK signal, the conventional response 301 may include PC and a UII of a response message in response to the ACK signal.

A length 302 may be omitted and may be included in the data block 303.

A cyclic redundancy check-16 (CRC-16) 304 is calculated for all bits 301, 302 and 303 which are of the response message in response to a command message and which are received prior to the CRC-16 304.

FIG. 4 is a flowchart of a data transmitting method performed by an RFID reader, according to an embodiment of the present invention. Hereinafter, detailed descriptions, which are the same as the aforementioned contents, will be omitted.

It is assumed that a command message in the embodiment of FIG. 4 includes a command code indicating an conventional ACK signal, and a response format requesting to insert a sensor data block that is subsequent to a UII of a response message in response to the conventional ACK signal and that includes sensor data of a sensor connected to an RFID tag. However, the command message may be applied to not only the conventional ACK signal but also may be applied to other signals defined in related standards. Also, the command message may be applied to a case where a command code is predefined to indicate a type of additional data to be added to a response message.

First, a random value issued from the RFID tag is received (operation S401).

When the random value does not collide with an identifier of another tag communicating with the RFID reader (operation S402), a value equal to the random value is allocated to an identifier of the RFID tag (operation S403), and then a command message is transmitted, wherein the command message includes an ACK signal and a response format requesting to insert a sensor data block that is subsequent to a UII of a response message in response to the ACK signal and that includes sensor data of a sensor connected to the RFID tag (operation S404).

The response message in response to the command message is received from the RFID tag (operation S405), and the sensor data subsequent to the UII of the response message is extracted according to the response format in the response message (operation S406).

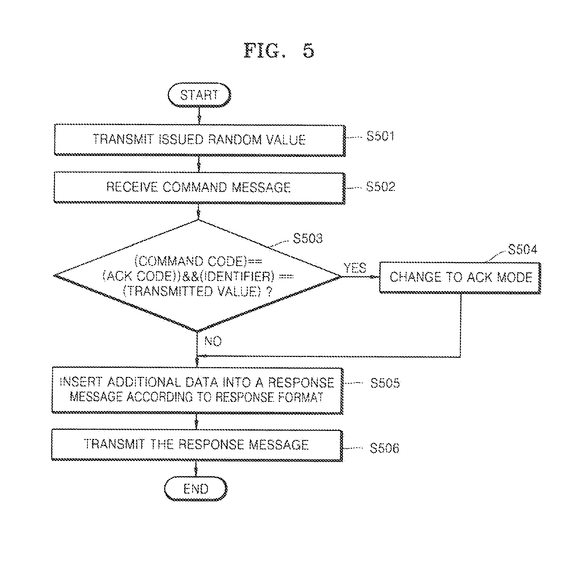

FIG. 5 is a flowchart of a data transmitting method performed by an RFID tag, according to another embodiment of the present invention. Hereinafter, detailed descriptions, which are the same as the aforementioned contents, will be omitted.

It is assumed that a command message in the embodiment of FIG. 5 includes a command code indicating an conventional ACK signal, and a response format requesting to insert a sensor data block that is subsequent to a UII of a response message in response to the conventional ACK signal and that includes sensor data of a sensor connected to the RFID tag. However, the command message may be applied to not only the conventional ACK signal but also may be applied to other signals defined in related standards. Also, the command message may be applied to a case where a command code is predefined to indicate a type of additional data to be added to a response message.

First, a random value is transmitted to an RFID reader, wherein the random value is issued by the RFID tag and is to be used as an identifier allowing the RFID reader to identify the RFID tag (operation S501).

A command message is received from the RFID reader (operation S502), and when a command code of the command message is the same as an ACK code and when the identifier of the command message is the same as the random value transmitted in operation S501 (operation S503), a state of the RFID tag is changed into an ACK mode (operation S504).

After that, additional data is inserted into the response message, according to a type of additional data, which is indicated by each of a plurality of bits in the response format of the command message (operation S505).

In the embodiment of the FIG. 5, it is assumed that the response format of the command message has a bit requesting to insert the sensor data block that is subsequent to the UII of the response message in response to the ACK signal and that includes sensor data of the sensor connected to the RFID tag, and thus, according to the response format, the response message is formed to further have the sensor data block including the sensor data subsequent to the UII of the response message in response to the ACK signal.

Then, the response message including the sensor data is transmitted (operation S506).

According to the one or more embodiments of the present invention, the RFID reader may obtain a response including necessary data from the RFID tag, without issuing an additional command.

Various components of the RFID reader 110 and the RFID tag 120 of the RFID system in FIG. 1 may be individually embodied or may be embodied in combination to a computer system, and in general, the computer system includes one or more output devices for displaying information to a user and includes at least one main unit connected to one or more input devices for receiving a user input. The main unit may include a processor connected to a memory system via a mutual access mechanism. The output and input devices are all connected to the processor and the memory system via the mutual access mechanism.

Also, in general, the RFID reader 110 and the RFID tag 120 in FIG. 1 include a predetermined computer readable medium. The computer readable medium may be a random usable medium that may be accessed by another computing device with respect to resource management. The computer readable medium may include, but is not limited to, a computer storage medium and a communication medium. The computer storage medium may include volatile and non-volatile medium, and detachable and non-detachable medium which are designed to store information including computer readable commands, data structures, program modules or other data. The computer storage medium may include, but is not limited to, random-access memory (RAM), read-only memory (ROM), electrically erasable programmable read-only memory (EEPROM), and flash memories or other memories, CD-ROMs, DVDs or other optical storage medium, magnetic cassettes, magnetic tapes, magnetic disc storage medium or other magnetic storage devices, and other media that may be accessed by a computing system in a resource managing system. The communication medium may implement computer readable commands, data structures, program modules or other data as modulation type data signals such as carrier signals or by using other transmission mechanisms, may include random data as the modulation type data signals such as the carrier signal or other transmission mechanisms, and may include an information delivering medium. For example, the communication medium may correspond to, but is not limited to, a wired network, a wire-based medium such as a direct wire-based connection, a wireless medium such as sound, radio frequency (RF), and infrared and other wireless media. Combinations obtained by combining the aforementioned items by using random elements may be included in the computer readable medium.

The output devices may be connected to the computer system. Examples of the output devices may include cathode-ray tube (CRT) displays, liquid crystal displays (LCDs), other video output devices, printers, communicating devices such as modems, storage devices such as discs or tapes, and audio inputs. The input devices may be connected to the computer system. Examples of the input devices may include keyboards, keypads, trackballs, mouse, pens, tablets, communicating devices, audio and video capturing devices and other data input devices. However, the one or more embodiments of the present invention are not limited to a specific input or output device which is combined with the computer system or to elements included in the description.

The computer system may be a general computer system that can be programmed by using computer programming languages such as SmallTalk, C++, Java, Ada, C#(C-Sharp), other script languages or assembly languages. Various features of the one or more embodiments of the present invention may be embodied in a non-program type environment (e.g., documents generated in Hypertext Markup Language (HTML), Extensible Markup Language (XML) or other formats for performing functions such as rendering features of graphic user interfaces or the like, with respect to a window of a browser program). Various features of the one or more embodiments of the present invention may be embodied as program type elements, non-program type elements or combinations of these program and non-program type elements. The computer system may indicate specifically programmed hardware or an Application Specific Integrated Circuit (ASIC), A reading system may include pagers, telephones, personal digital assistants (PDAs) or other electronic data communicating devices.

In a general communication system, a processor may generally indicate a commercially usable processor such as a Pentium® processor of the Intel Corporation but is not limited thereto. In general, such a processor executes an operating system (OS) such as, but is not limited to, Windows 95®, Windows 98®, Windows NT®, Windows 2000® or Windows XP®, which are of the Microsoft Corporation, MAC OS System X of Apple Computer, Solaris Operating System of Sun Microsystems or UNIX via various sources.

The processor and the OS define a computer platform on which application programs are recorded with a high-level programming language. However, the one or more embodiments of the present invention are not limited to a specific computer system platform, a specific processor, a specific OS or a specific network. It will be understood by one of ordinary skill in the art that the one or more embodiments of the present invention are not limited to a specific programming language or a specific computer system. Thus, other appropriate programming languages and computer systems may also be used.

One or more parts of the computer system may be distributed over network-coupled computer systems (not shown). These network-coupled computer systems may be general computer systems. Features of the one or more embodiments of the present invention may be formed (e.g., as a server) to provide a service to one or more client computers or may be distributed as a part of a distribution system over one or more computer systems that are configured to perform an entire task. For example, features of the one or more embodiments of the present invention may be performed in a client-server system including components that are distributed over one or more server systems for performing various functions. These components may be executable intermediate codes (e.g., intermediate language (IL)) or interpreted codes (e.g., Java), which communicate via a communication network (e.g., Internet) by using communication protocols (e.g., TCP/IP).

It will be apparent that the one or more embodiments of the present invention are not limited to being executed in a specific system or a specific system group. It will also be apparent that the one or more embodiments of the present invention are not limited to a specific architecture, a specific network or a specific communication protocol.

While this invention has been particularly shown and described with reference to exemplary embodiments thereof, it will be understood by those of ordinary skill in the art that various changes in form and details may be made therein without departing from the scope of the invention as defined by the appended claims. The exemplary embodiments should be considered in a descriptive sense only and not for purposes of limitation. Therefore, the scope of the invention is defined not by the detailed description of the invention but by the appended claims, and all differences within the scope will be construed as being included in the present invention. In the claims, ordinal numbers such as "first" or "second" should be considered to discriminate between components that are equally named and should not be considered to indicate that one component dominates other components or to indicate a temporal order of operations with respect to a method.

## Claims

1. A data receiving method performed by an RFID (radio frequency identification) reader (110), the data receiving method comprising:
receiving a random value issued from an RFID tag (120) and being **characterised in**
generating a command message comprising a command code (201) indicating a type of a command to be delivered to an RFID tag, a response format field (202) having one or more bits for indicating a type of additional data to be added to a response message to be received from the RFID tag, and an identifier (203) identifying the RFID tag;
transmitting the command message to the RFID tag;
receiving the response message, in response to the command message, from the RFID tag; and
extracting the additional data from the received response message according to the response format, and wherein
the identifier is allocated a value that is the same as the random value when the random value does not collide with another identifier of another tag from among a plurality of tags communicating with the RFID reader.

2. The data receiving method of claim 1, wherein the command code (201) comprises an ACK (acknowledgement) code for indicating an ACK command acknowledging use of the identifier (203) with respect to communication with the RFID tag (120).

3. The data receiving method of claim 1, wherein the type of the additional data is URL(uniform resource locator) or URN(uniform resource name).

4. The data receiving method of claim 1, wherein the additional data comprises at least one of state information about a sensor connected to the RFID tag (120), and sensor data obtained by the sensor.

5. The data receiving method of claim 1, wherein the response format comprises a bit for indicating whether to add a data block comprising the additional data to an area subsequent to a UII(unique item identifier) of the response message,

6. The data receiving method of claim 4, wherein the response format further comprises a bit for indicating whether a data value of the sensor data, which is obtained by the sensor connected to the RFID tag (120), exceeds an upper limit threshold value or a lower limit threshold value.

7. The data receiving method of claim 1, further comprising when the response message in response to the command message is not received during a wait time period predetermined, transmitting a query requesting the RFID tag (120) to issue a random value.

8. A data receiving method performed by an RFID (radio frequency identification) reader (110), the data receiving method comprising:
receiving a random value issued from an RFID tag (120) and being **characterised in**
generating a command message comprising a command code indicating a command in which a type of additional data to be added to a response message to be received from an RFID tag is predefined, and an identifier identifying the RFID tag;
transmitting the command message to the RFID tag;
receiving the response message, in response to the command message, from the RFID tag; and
extracting the additional data from the received response message according to the predefined type of the additional data, and wherein
the identifier is allocated a value that is the same as the random value when the random value does not collide with another identifier of another tag from among a plurality of tags communicating with the RFID reader.

9. The data receiving method of claim 8, wherein the additional data comprises at least one of state information about a sensor connected to the RFID tag (120), and sensor data obtained by the sensor.

10. The data receiving method of claim 8, further comprising when the response message in response to the command message is not received during a wait time period predetermined, transmitting a query requesting the RFID tag (120) to issue a random value.

11. The data receiving method of claim 8, further comprising when the RFID tag (120) operates by using its own power via a separate battery, temporarily discontinuing transmission of the command message.

12. A data transmitting method performed by an RFID (radio frequency identification) tag (120), the data transmitting method comprising:
generating a random value and transmitting the random value to an RFID reader (110) and being **characterised in**
receiving a command message comprising a command code (201) indicating a type of a command of an RFID reader, a response format field (202) having one or more bits for indicating a type of additional data to be added to a response message to be transmitted to the RFID reader, and an identifier (203) allowing the RFID reader to identify the RFID tag;
and, when the identifier is the same as the random value,
inserting the additional data into the response message in response to the command message, according to information indicated by the one or more bits of the response format of the command message and
transmitting the response message to the RFID reader.

13. The data transmitting method of claim 12, when the command code (201) of the command message is the same as an ACK (acknowledgement) code and when the identifier (203) of the command message is the same as the random value, further comprising changing a state of the RFID tag (120) into an ACK (acknowledgement) mode indicating a state in which the RFID tag is recognized by the RFID reader (110) whereby the RFID tag is identified as the identifier.

14. A data transmitting method performed by an RFID (radio frequency identification) tag (120), the data transmitting method comprising:
generating a random value and transmitting the random value to an RFID reader (110) and being **characterised in**
receiving a command message comprising a command code indicating a command for designating a type of additional data to be transmitted to the RFID reader, and an identifier allowing the RFID reader to identify the RFID tag;
and, when the identifier is the same as the random value,
inserting the additional data into the response message in response to the command message, according to the designated type of the additional data and
transmitting the response message to the RFID reader.

## Patentansprüche

1. Datenempfangsverfahren, ausgeführt durch ein RFID (-Funkfrequenz-Identifikations)-Lesegerät (110), wobei das Datenempfangsverfahren Folgendes aufweist:
Empfangen eines Zufallswerts, der von einem RFID-Tag (120) ausgegeben ist und **gekennzeichnet ist durch**
Erzeugen einer Befehlsnachricht, aufweisend einen Befehlscode (201), der einen Typ von an einen RFID-Tag zu lieferndem Befehl angibt, ein Antwortformat-Feld (202), das ein oder mehrere Bits für Angabe eines Typs von zusätzlichen Daten, die einer vom RFID-Tag zu empfangenden Antwortnachricht hinzuzufügen sind, aufweist, und einen Identifikator (203), der den RFID-Tag identifiziert;
Senden der Befehlsnachricht an den RFID-Tag;
Empfangen der Antwortnachricht, als Reaktion auf die Befehlsnachricht, vom RFID-Tag; und
Extrahieren der zusätzlichen Daten aus der empfangenen Antwortnachricht entsprechend dem Antwortformat, und wobei
dem Identifikator ein Wert zugeteilt ist, der gleich ist wie der Zufallswert, wenn der Zufallswert nicht mit einem anderen Identifikator eines anderen Tags von mehreren mit dem RFID-Lesegerät kommunizierenden Tags kollidiert.

2. Datenempfangsverfahren nach Anspruch 1, wobei der Befehlscode (201) einen ACK-Code (Acknowledgement-/Bestätigungscode) zur Angabe eines ACK-Befehls aufweist, der die Anwendung des Identifikators (203) in Bezug auf Kommunikation mit dem RFID-Tag (120) bestätigt.

3. Datenempfangsverfahren nach Anspruch 1, wobei der Typ der zusätzlichen Daten URL (Uniform Resource Locator - einheitlicher Ressourcenanzeiger) oder URN (Uniform Resource Name - einheitlicher Ressourcenname) ist.

4. Datenempfangsverfahren nach Anspruch 1, wobei die zusätzlichen Daten mindestens eines von Statusinformation über einen mit dem RFID-Tag (120) verbundenen Sensor und vom Sensor bezogenen Sensordaten aufweist.

5. Datenempfangsverfahren nach Anspruch 1, wobei das Antwortformat ein Bit zur Anzeige, ob ein die zusätzlichen Daten aufweisender Datenblock einem einer UII (Unique Item Identifier - eindeutige Identifizierung) nachfolgenden Bereich der Antwortnachricht hinzugefügt werden soll, aufweist.

6. Datenempfangsverfahren nach Anspruch 4, wobei das Antwortformat ferner ein Bit zur Angabe, ob ein Datenwert der Sensordaten, der von dem mit dem RFID-Tag (120) verbundenen Sensor bezogen wird, einen oberen Schwellengrenzwert oder einen unteren Schwellengrenzwert überschreitet, aufweist.

7. Datenempfangsverfahren nach Anspruch 1, ferner aufweisend, wenn die Antwortnachricht als Reaktion auf die Befehlsnachricht nicht während einer im Voraus bestimmten Wartezeitperiode empfangen wird, ein Senden einer Frage mit der Anforderung an den RFID-Tag (120) zur Ausgabe eines Zufallswerts.

8. Datenempfangsverfahren, ausgeführt von einem RFID-(Funkfrequenz-Identifikations)-Lesegerät (110), wobei das Datenempfangsverfahren Folgendes aufweist:
Empfangen eines von einem RFID-Tag (120) ausgegebenen Zufallswerts,
und **gekennzeichnet durch**
Erzeugen einer Befehlsnachricht, aufweisend einen Befehlscode, der einen Befehl angibt, in dem ein Typ von zusätzlichen Daten, die einer von einem RFID-Tag zu empfangenden Antwortnachricht hinzuzufügen sind, im Voraus bestimmt wird und ein Identifikator den RFID-Tag identifiziert;
Senden der Befehlsnachricht an den RFID-Tag;
Empfangen der Antwortnachricht, als Reaktion auf die Befehlsnachricht, vom RFID-Tag; und
Extrahieren der zusätzlichen Daten aus der empfangenen Antwortnachricht entsprechend dem im Voraus bestimmten Typ von zusätzlichen Daten, und wobei
dem Identifikator ein Wert zugeteilt ist, der gleich ist wie der Zufallswert, wenn der Zufallswert nicht mit einem anderen Identifikator eines anderen Tags von mehreren mit dem RFID-Lesegerät kommunizierenden Tags kollidiert.

9. Datenempfangsverfahren nach Anspruch 8, wobei die zusätzlichen Daten mindestens eines von Statusinformation über einen mit dem RFID-Tag (120) verbundenen Sensor und vom Sensor bezogenen Sensordaten aufweist.

10. Datenempfangsverfahren nach Anspruch 8, ferner aufweisend, wenn die Antwortnachricht als Reaktion auf die Befehlsnachricht nicht während einer im Voraus bestimmten Wartezeitperiode empfangen wird, ein Senden einer Frage mit der Anforderung an den RFID-Tag (120) zur Ausgabe eines Zufallswerts.

11. Datenempfangsverfahren nach Anspruch 8, ferner aufweisend, dass, wenn der RFID-Tag (120) unter Anwenden seiner eigenen Stromversorgung über eine separate Batterie arbeitet, das Senden der Befehlsnachricht vorübergehend unterbrochen wird.

12. Datenübertragungsverfahren, ausgeführt durch einen RFID-Tag (Funkfrequenz-Identifikations-Tag) (120), wobei das Datenübertragungsverfahren Folgendes aufweist:
Erzeugen eines Zufallswerts und Senden des Zufallswerts an ein RFID-Lesegerät (110), und **gekennzeichnet durch**
Empfangen einer Befehlsnachricht, aufweisend einen Befehlscode (201), der einen Typ von Befehl eines RFID-Lesegeräts angibt, ein Antwortformat-Feld (202), das ein oder mehrere Bits für Angabe eines Typs von zusätzlichen Daten, die einer an das RFID-Lesegerät zu sendenden Antwortnachricht hinzuzufügen sind, aufweist, und einen Identifikator (203), der dem RFID-Lesegerät ein Identifizieren des RFID-Tags gestattet; und
wenn der Identifikator gleich ist wie der Zufallswert,
Einfügen der zusätzlichen Daten in die Antwortnachricht als Reaktion auf die Befehlsnachricht, entsprechend Information, die von dem einen oder den mehreren Bits des Antwortformats der Befehlsnachricht angegeben ist, und
Senden der Antwortnachricht an das RFID-Lesegerät.

13. Datenübertragungsverfahren nach Anspruch 12, wenn der Befehlscode (201) der Befehlsnachricht gleich ist wie ein ACK-Code (Acknowledgement-/Bestätigungscode), und wenn der Identifikator (203) der Befehlsnachricht gleich ist wie der Zufallswert, ferner aufweisend Ändern des Status des RFID-Tags (120) in einen ACK-Modus (Acknowledgement-/Bestätigungsmodus), der einen Status angibt, in dem der RFID-Tag vom RFID-Lesegerät (110) erkannt ist, wobei der RFID-Tag als der Identifikator identifiziert wird.

14. Datenübertragungsverfahren, ausgeführt durch einen RFID-Tag (Funkfrequenz-Identifikations-Tag) (120), wobei das Datenübertragungsverfahren Folgendes aufweist:
Erzeugen eines Zufallswerts und Senden des Zufallswert an ein RFID-Lesegerät (110), und **gekennzeichnet durch**
Empfangen einer Befehlsnachricht, aufweisend einen Befehlscode, der einen Befehl zum Bezeichnen eines Typs von zusätzlichen Daten, die an das RFID-Lesegerät zu senden sind, angibt, und einen Identifikator der dem RFID-Lesegerät ein Identifizieren des RFID-Tags gestattet;
und, wenn der Identifikator gleich dem Zufallswert ist,
Einfügen der zusätzlichen Daten in die Antwortnachricht als Reaktion auf die Befehlsnachricht entsprechend dem bezeichneten Typ von zusätzlichen Daten, und
Senden der Antwortnachricht an das RFID-Lesegerät.

## Revendications

1. Procédé de réception de données exécuté par un lecteur RFID (lecteur d'identification par fréquence radioélectrique) (110), le procédé de réception de données comprenant :
la réception d'une valeur aléatoire émise par une étiquette RFID (120) ;
et **caractérisé par**
la génération d'un message de commande comprenant un code de commande (201) indiquant un type d'une commande à délivrer à une étiquette RFID, un champ de format de réponse (202) ayant un ou plusieurs bits pour indiquer un type de données supplémentaires à ajouter à un message de réponse à recevoir de l'étiquette RFID, et un identifiant (203) qui identifie l'étiquette RFID ;
la transmission du message de commande à l'étiquette RFID ;
la réception du message de réponse, en réponse au message de commande, depuis l'étiquette RFID ; et
l'extraction des données supplémentaires à partir du message de réponse reçu en fonction du format de réponse, et dans lequel
l'identifiant se voit attribuer une valeur qui est la même que la valeur aléatoire quand la valeur aléatoire n'est pas en conflit avec un autre identifiant d'une autre étiquette parmi une pluralité d'étiquettes communiquant avec le lecteur RFID.

2. Procédé de réception de données selon la revendication 1, dans lequel le code de commande (201) comprend un code d'acquittement (ACK) pour indiquer une commande ACK acquittant l'utilisation de l'identifiant (203) par rapport à la communication avec l'étiquette RFID (120).

3. Procédé de réception de données selon la revendication 1, dans lequel le type des données supplémentaires est un URL (localisateur de ressource uniforme) ou un URN (nom de ressource uniforme).

4. Procédé de réception de données selon la revendication 1, dans lequel les données supplémentaires comprennent au moins l'une d'une information d'état d'un capteur connecté à l'étiquette RFID (120), et de données de capteur obtenues par le capteur.

5. Procédé de réception de données selon la revendication 1, dans lequel le format de réponse comprend un bit pour indiquer qu'il convient ou non d'ajouter un bloc de données comprenant les données supplémentaires à une zone ultérieure à un UII (identifiant d'article unique) du message de réponse.

6. Procédé de réception de données selon la revendication 4, dans lequel le format de réponse comprend en outre un bit pour indiquer qu'une valeur de données des données de capteur, qui est obtenue par le capteur connecté à l'étiquette RFID (120), dépasse ou non une valeur limite supérieure ou une valeur limite inférieure.

7. Procédé de réception de données selon la revendication 1, comprenant en outre, quand le message de réponse en réponse au message de commande n'est pas reçu durant une période de temps d'attente prédéterminée, la transmission d'une interrogation demandant à l'étiquette RFID (120) d'émettre une valeur aléatoire.

8. Procédé de réception de données exécuté par un lecteur RFID (lecteur d'identification par fréquence radioélectrique) (110), le procédé de réception de données comprenant :
la réception d'une valeur aléatoire émise par une étiquette RFID (120) ;
et **caractérisé par**
la génération d'un message de commande comprenant un code de commande indiquant une commande dans laquelle un type de données supplémentaires à ajouter à un message de réponse à recevoir d'une étiquette RFID est prédéfini, et un identifiant identifiant l'étiquette RFID ;
la transmission du message de commande à l'étiquette RFID ;
la réception du message de réponse, en réponse au message de commande, depuis l'étiquette RFID ; et
l'extraction des données supplémentaires à partir du message de réponse reçu en fonction du type prédéfini des données supplémentaires, et dans lequel l'identifiant se voit attribuer une valeur qui est la même que la valeur aléatoire quand la valeur aléatoire n'est pas en conflit avec un autre identifiant d'une autre étiquette parmi une pluralité d'étiquettes communiquant avec le lecteur RFID.

9. Procédé de réception de données selon la revendication 8, dans lequel les données supplémentaires comprennent au moins l'une d'une information d'état d'un capteur connecté à l'étiquette RFID (120), et de données de capteur obtenues par le capteur.

10. Procédé de réception de données selon la revendication 8, comprenant en outre, quand le message de réponse en réponse au message de commande n'est pas reçu durant une période de temps d'attente prédéterminée, la transmission d'une interrogation demandant à l'étiquette RFID (120) d'émettre une valeur aléatoire.

11. Procédé de réception de données selon la revendication 8, comprenant en outre, quand l'étiquette RFID (120) fonctionne en utilisant sa propre puissance par l'intermédiaire d'une batterie séparée, l'interruption temporaire de la transmission du message de commande.

12. Procédé de transmission de données exécuté par une étiquette RFID (étiquette d'identification par fréquence radioélectrique) (120), le procédé de transmission de données comprenant :
la génération d'une valeur aléatoire et la transmission de la valeur aléatoire à un lecteur RFID (110) ;
et **caractérisé par**
la réception d'un message de commande comprenant un code de commande (201) indiquant un type d'une commande d'un lecteur RFID, un champ de format de réponse (202) ayant un ou plusieurs bits pour indiquer un type de données supplémentaires à ajouter à un message de réponse à transmettre au lecteur RFID, et un identifiant (203) permettant au lecteur RFID d'identifier l'étiquette RFID ;
et, quand l'identifiant est identique à la valeur aléatoire,
l'insertion des données supplémentaires dans le message de réponse en réponse au message de commande, en fonction des informations indiquées par les un ou
plusieurs bits du format de réponse du message de commande et la transmission du message de réponse au lecteur RFID.

13. Procédé de transmission de données selon la revendication 12, comprenant en outre quand le code de commande (201) du message de commande est le même qu'un code d'acquittement (ACK) et quand l'identifiant (203) du message de commande est le même que la valeur aléatoire, un changement d'un état de l'étiquette RFID (120) en un mode ACK (acquitté) indiquant un état dans lequel l'étiquette RFID est reconnue par le lecteur RFID (110), moyennant quoi l'étiquette RFID est identifiée comme l'identifiant.

14. Procédé de transmission de données exécuté par une étiquette RFID (étiquette d'identification par fréquence radioélectrique) (120), le procédé de transmission de données comprenant :
la génération d'une valeur aléatoire et la transmission de la valeur aléatoire à un lecteur RFID (110) ;
et **caractérisé par**
la réception d'un message de commande comprenant un code de commande indiquant une commande pour désigner un type de données supplémentaires à transmettre au lecteur RFID, et un identifiant permettant au lecteur RFID d'identifier l'étiquette RFID ;
et, quand l'identifiant est identique à la valeur aléatoire,
l'insertion des données supplémentaires dans le message de réponse en réponse au message de commande, en fonction du type désigné des données supplémentaires ;
et
la transmission du message de réponse au lecteur RFID.
